(19) Europäisches Patentamt
European Patent Office
Office européen des brevets

(11) Veröffentlichungsnummer: **0 362 140 B1**

(12) **EUROPÄISCHE PATENTSCHRIFT**

(45) Veröffentlichungstag der Patentschrift: **22.11.95**

(51) Int. Cl.$^{6}$: **C08G 59/68**, C08G 59/14, C08G 59/06

(21) Anmeldenummer: **89810715.6**

(22) Anmeldetag: **20.09.89**

(54) **Epoxidharzgemische.**

(30) Priorität: **29.09.88 CH 3620/88**
**27.07.89 CH 2802/89**

(43) Veröffentlichungstag der Anmeldung:
**04.04.90 Patentblatt 90/14**

(45) Bekanntmachung des Hinweises auf die Patenterteilung:
**22.11.95 Patentblatt 95/47**

(84) Benannte Vertragsstaaten:
**BE CH DE ES FR GB IT LI NL**

(56) Entgegenhaltungen:
**EP-A- 0 099 334**
**EP-A- 0 314 619**
**US-A- 4 474 935**

**Database WPIL(DERWENT), Abstract NO.86209732**

(73) Patentinhaber: **CIBA-GEIGY AG**
**Klybeckstrasse 141**
**CH-4002 Basel (CH)**

(72) Erfinder: **Hofer, Arnold, Dr.**
**Langmattstrasse 5**
**CH-4132 Muttenz (CH)**
Erfinder: **Gempeler, Hans, Dr.**
**Blumenrain 10**
**CH-4147 Aesch (CH)**

**EP 0 362 140 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Epoxidharzzusammensetzungen, welche in Gegenwart von Pyrrolidiniumsalzen vorverlängert werden können, sowie die Verwendung dieser Salze als Vorverlängerungskatalysatoren für Epoxidharze.

Unter Vorverlängerung von Epoxidharzen wird allgemein eine Kettenverlängerung und damit verbunden eine Molekulargewichtserhöhung von Epoxidharzen verstanden. Dabei spielt vor allem die Selektivität des verwendeten Katalysators eine Rolle, welche die Erzeugung linearer Polyhydroxyether sicherstellen soll.

Gleichzeitig mit der Selektivität sollen Vorverlängerungskatalysatoren genügend reaktionsfähig sein, um die Bildung linearer fester vorverlängerter höhermolekularer Epoxidharze mit wirtschaftlich günstiger Geschwindigkeit zu ermöglichen. Hohe Reaktionsgeschwindigkeiten sind dabei wegen der Oeffnung des Epoxidrings von starker Wärmeentwicklung begleitet, und die freigesetzte Wärme kann zur Aufheizung des Reaktionsgemisches verwendet werden.

Viele Verbindungen wurden als Katalysatoren für die Vorverlängerung flüssiger Epoxidharze vorgeschlagen oder beschrieben. Zum Teil sind diese jedoch nicht selektiv und verursachen die obenerwähnte Verzweigung oder Vernetzung. Andere wiederum sind unwirksam in Förderung der stark exothermen Vorverlängerungsreaktionen zur Erzeugung eines befriedigend vorverlängerten linearen festen Epoxidharzes mit praktisch brauchbarer Geschwindigkeit.

Als Vorverlängerungskatalysatoren (advancement catalysts) sind z.B. Tetraalkylammoniumhydroxide oder -halogenide bekannt (s. US-A-4,465,722).

Ausserdem wurde im US-A-3,275,708 z.B. N-Methylmorpholin als Vorverlängerungskatalysator vorgeschlagen. Eine unerwünschte Erscheinung dabei ist allerdings die Spaltung chemischer Verbindungen im Reaktionsgemisch, wodurch nicht nur die Einheitlichkeit des gewünschten Produkts leidet, sondern auch schlechtere Farbeigenschaften des vorverlängerten Produkts in Kauf genommen werden müssen. Ersetzt man N-Methylmorpholin durch N-Methylpyrrolidin, so verdoppelt sich der Gehalt an Spaltprodukten, was einen deutlichen Nachteil darstellt. Ueberraschenderweise hat sich gezeigt, dass Pyrrolidiniumsalze zu vorverlängerten Harzen mit deutlich geringerem Gehalt an Spaltprodukten führen. Die so hergestellten vorverlängerten Epoxidharze zeichnen sich durch niedrige Viskosität, hohe Temperaturbeständigkeit und hohe Linearität aus.

Die vorliegende Erfindung betrifft Epoxidharzzusammensetzungen, enthaltend ein bei Raumtemperatur flüssiges Epoxidharz mit durchschnittlich mehr als einer Epoxidgruppe pro Molekül, eine Verbindung mit zwei phenolischen Hydroxylgruppen und mindestens ein quaternäres Pyrrolidiniumsalz.

Als Epoxidverbindungen kommen vor allem solche in Frage, deren Molekulargewicht relativ niedrig ist, z.B. kleiner als 3 500, insbesondere kleiner als 2 000, bevorzugt zwischen 175 und 350. Bei den vorzugsweise verwendeten Diglycidylverbindungen kann es sich um Ether oder Ester handeln; ferner können die Glycidylgruppen auch an Stickstoffatome geknüpft sein. Als Phenole, welche den Ethern zugrunde liegen, sind beispielsweise die folgenden zu nennen: einkernige Diphenole (wie Resorcin), Naphthaline mit zwei Hydroxylgruppen, wie 1,4-Dihydroxy-naphthalin, Biphenyle und andere zweikernige aromatische Verbindungen, die eine Methylen-, Isopropyliden-, O-, $SO_2$-, oder S-Brücke aufweisen und zwei Hydroxylgruppen an den aromatischen Kernen gebunden enthalten, wie insbesondere Bisphenol A, Bisphenol F oder Bisphenol S; die Benzolkerne können auch Halogenatome aufweisen, wie Tetrabrombisphenol A. Im weiteren kommen aliphatische Dihydroxyverbindungen in Betracht, z.B. 1,4-Butandiol oder Polyetherglykol. Als Basis für die Glycidylester dienen beispielsweise die Phthalsäure, Terephthalsäure, Tetrahydrophthalsäure, Hexahydrophthalsäure, Adipinsäure, Trimethyladipinsäure oder Sebazinsäure. Ferner kommen einkernige Hydantoine mit Glycidylgruppen an den Stickstoffatomen, wie N,N′-Diglycidyl-hydantoine, in Frage. Andere Glycidylverbindungen von Stickstoff enthaltenden Ringen sind solche von 5,6-Dihydrouraziien oder Barbitursäuren.

Dabei handelt es sich um bekannte und mehrheitlich käufliche Produkte.

Erfindungsgemäss werden z.B. Pyrrolidiniumsalze eingesetzt, welche der Formel I entsprechen

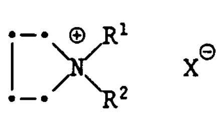

(I),

worin $R^1$ $C_1$-$C_8$-Alkyl und $R^2$ $C_1$-$C_8$-Alkyl, $C_2$-$C_8$-Hydroxyalkyl, $C_4$-$C_8$-Alkoxy-hydroxyalkyl, $C_2$-$C_8$-Alkenyl, $C_3$-$C_8$-Alkoxycarbonylalkyl, $C_3$-$C_8$-Alkylcarbonylalkyl, $C_7$-$C_9$-Phenylalkyl, $C_7$-$C_9$-Phenylhydroxyalkyl oder Phenylcarbonylmethyl bedeutet, und X Halogen oder Acetat ist.

Als Pyrrolidiniumsalze eignen sich vorzugsweise solche, die der Formel (Ib) entsprechen

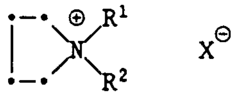

(Ib),

worin $R^1$ $C_1$-$C_8$-Alkyl und $R^2$ $C_1$-$C_8$-Alkyl, $C_2$-$C_8$-Hydroxyalkyl oder Benzyl bedeutet und X Halogen oder Acetat ist.

Als $C_1$-$C_8$-Alkyl-Reste, bevorzugt $C_1$-$C_4$-Alkyl-Reste kommen Methyl, Ethyl, n-Propyl, n-Butyl, n-Hexyl oder n-Octyl in Frage. Diese Reste können insbesondere in 2-Stellung (falls vorhanden) eine Hydroxygruppen tragen. Insbesondere bedeutet $R^1$ Methyl oder Ethyl und $R^2$ Ethyl.

Mit $C_4$-$C_8$-Alkoxy-hydroxyalkyl werden Reste bezeichnet, die sowohl eine Etherfunktion, als auch eine Hydroxygruppe enthalten, z.B. (2-Hydroxy-3-butoxy)-propyl.

Bedeutet $R^2$ Alkenyl, so kann es beispielsweise Allyl oder Methallyl sein.

Weitere Beispiele für $R^2$ sind Acetonyl, Ethoxycarbonylmethyl, (2-Hydroxy-2-phenyl)-ethyl oder Phenylcarbonylmethyl (= Phenacyl).

X als Halogen ist insbesondere I, Br oder Cl und vor allem I.

Die Verbindungen der Formel I sind bekannt und können auf bekannte Weise hergestellt werden, z.B. durch Umsetzung eines Pyrrolidins der Formel II

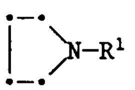

(II)

mit einer Verbindung der Formel III $R^2$-X. In diesem Zusammenhang wird auf die Beispiele verwiesen.

Das erfindungsgemäss zu verwendende Pyrrolidiniumsalz wird in katalytisch wirksamen Mengen eingesetzt, z.B. in einer Menge von etwa 2 bis 5000, vorzugsweise 20-2000 und insbesondere 50-1000 ppm, bezogen auf das Gewicht des Basisharzes.

Das Vorverlängerungsverfahren wird bekanntermassen durchgeführt, durch Umsetzung des Epoxidharzes mit Verbindungen, welche zwei phenolische Hydroxylgruppen enthalten.

Dabei können alle in der Methodik der Vorverlängerung bekannten aromatischen Verbindungen mit vorzugsweise zwei phenolischen Hydroxylgruppen verwendet werden. Beispielsweise seien genannt: einkernige Diphenole (wie Resorcin), Naphthaline mit zwei Hydroxylgruppen, wie 1,4-Dihydroxynaphthalin, Biphenyle und andere zweikernige aromatische Verbindungen, die eine Methylen-, Isopropyliden-, O-, $SO_2$-, oder S-Brücke aufweisen und zwei Hydroxylgruppen an den aromatischen Kernen gebunden enthalten, wie insbesondere Bisphenol A, Bisphenol F oder Bisphenol S; die Benzolkerne können auch Halogenatome aufweisen, wie Tetrabrombisphenol A.

Die Menge des Phenols hängt davon ab, was für ein Produkt gewünscht wird. Je grösser sie ist, desto höher wird das Molekulargewicht des Endproduktes im allgemeinen sein. Dabei wird auch der Schmelzpunkt ansteigen und werden sich die physikalischen und chemischen Eigenschaften des gewonnenen Harzes ändern.

Die Vorverlängerungsverfahren und ihre Durchführung sind bekannt und beispielsweise in den US-A-3,275,708 und 4,465,722 beschrieben.

Dabei erfolgt die Umsetzung beispielsweise bei einer Temperatur von 100-220 °C, bevorzugt 120-190 °C und einem Druck von 10-1000 mbar, bevorzugt 200-800 mbar.

Die auf diese Weise erhaltenen vorverlängerten Epoxidharze zeichnen sich durch hohe Stabilität der Epoxidzahl und der Viskosität nach thermischer Belastung aus. Ausserdem besitzen diese Harze eine für die Weiterverarbeitung günstige, niedrige Viskosität. Es hat sich gezeigt, dass die erfindungsgemäss einzusetzenden Vorverlängerungskatalysatoren eine konstante Aktivität in der Reaktion besitzen und durch ihre hohe Selektivität zu ausserordentlich linearen Produkten führen. Auf den Einsatz eines Kettenabbrechers kann ausserdem verzichtet werden. Falls erwünscht ist auch die Verwendung eines monofunktionellen Kettenabbrechers, z.B. eines Phenols, für die optimale Durchführung der Vorverlängerung geeignet. Die Katalysatoren sind in relativ kleinen Mengen wirksam, die Reaktion verläuft rasch und es ist eine nur geringe Neigung zu unerwünschter Phenolspaltung festzustellen. Dies zeigt sich in einem guten Farbverhalten der Produkte.

Die gehärteten Endprodukte (hergestellt durch Vernetzen mit üblichen Härtungsmitteln für Epoxidharze, wie Säureanhydride, Polyamine, mehrwertige Phenole usw.) weisen gute Flexibilität auf.

Die Produkte können für den Oberflächenschutz, zur Herstellung von Giesslingen, insbesondere auf dem Elektrogebiet, von Prepregs und Laminaten verwendet werden.

Besonders erwähnenswert ist ihr Einsatz zur Herstellung von Festharzen als Bindemittel von Pulverlak-ken, von wasserlöslichen Primern (z.B. für Autokarosserien), für Dosen- und Tubenlacke.

Beispiel 1: N,N-Dimethylpyrrolidinium-chlorid

In einem kleinen Glasautoklaven werden die folgenden Substanzen zur Reaktion gebracht:
60,0g N-Methylpyrrolidin (0,7 mol)
300 ml Methylethylketon (MEK)
65 g Methylchlorid (1,06 mol)
Nach dem Einfüllen der ersten beiden Substanzen wird der Autoklav verschlossen, auf 30 °C vorgewärmt und gleichzeitig die in einem separaten Druckgefäss abgewogene Menge Methylchlorid in den Autoklaven gebracht. Während der Reaktionszeit von drei Stunden steigt die Temperatur auf ca. 90 °C und der Druck auf $3{,}5 \cdot 10^5$ Pa an. Nach dem Entspannen wird das Gemisch genutscht, mit MEK gewaschen und im Vacuumschrank getrocknet. Ausbeute 85 g (90 %), Schmelzpunkt >340 °C unter Zersetzung.

Beispiel 2: N-Ethyl-N-methylpyrrolidinium-iodid

In einer 500 ml Schliffbirne werden die folgenden Substanzen zur Reaktion gebracht:
21,3 ml N-Methylpyrrolidin (0,2 mol)
300 ml Methylethylketon (MEK)
16,3 ml Ethyliodid (0,2 mol)
Nach einer Reaktionszeit von 2 Stunden bei 45 °C wird das Reaktionsgemisch genutscht, mit wenig MEK gewaschen und im Vacuumschrank getrocknet. Ausbeute 45 g (92 %), Schmelzpunkt 302-305 °C.

Beispiel 3: N-Butyl-N-methylpyrrolidinium-bromid

In einer 500 ml Schliffbirne werden die folgenden Substanzen vermischt und bei 60 °C zur Reaktion gebracht:
21,3 ml N-Methylpyrrolidin (0,2 mol)
50 ml Methylisobutylketon (MIBK)
20,8 ml Butylbromid (0,2 mol)
Nach zwei Stunden Reaktionszeit wird das Gemisch, ein dicker Kristallbrei, mit weiteren 40 ml MIBK verdünnt, genutscht, mit MIBK gewaschen und getrocknet. Ausbeute 36 g (81 %), Schmelzpunkt 199-201 °C.

Beispiel 4: N-Benzyl-N-methylpyrrolidinium-chlorid

In einer 500 ml Schliffbirne werden die folgenden Substanzen bei 60 °C zur Reaktion gebracht:
21,3 ml N-Methylpyrrolidin (0,2 mol)
50 ml Methylethylketon (MEK)
25,3 ml Benzylchlorid (0,2 mol)
Nach vier Stunden Reaktionszeit wird das Reaktionsgemisch mit wenig MEK verdünnt und genutscht, mit MEK gewaschen und getrocknet. Ausbeute 21 g (50 %), Schmelzpunkt 246-249 °C.

Beispiel 5: N-Acetonyl-N-methylpyrrolidinium-chlorid

In einer 500 ml fassenden Schliffbirne werden die folgenden Substanzen vermischt und bei 50 °C zur Reaktion gebracht:
21,3 ml N-Methylpyrrolidin (0,2 mol)
40 ml Methylisobutylketon (MIBK)
16,7 ml Chloraceton (0,2 mol)
Nach fünf Stunden Reaktionszeit wird das Gemisch am Rotationsverdampfer eingeengt und das erhaltene honigartige Produkt mit Butanol auf 50 % verdünnt. Die Ausbeute beträgt 33,9 g ≙ 94 % und der Brechungsindex des unverdünnten Produktes ist $n_{20}^{D}$ = 1,481.

Beispiel 6: N-Allyl-N-methylpyrrolidinium-bromid

In einer 1000 ml - Schliffbirne werden die ersten zwei der folgenden Substanzen vermischt und die dritte Substanz in fünf Portionen mit gleichzeitigem Kühlen zugegeben:
53,3 ml N-Methylpyrrolidin (0,5 mol)
160 ml Methylisobutylketon (MIBK)
42,3 ml Allylbromid (0,5 mol)
Das Reaktionsgemisch wird zunächst bei etwa 20 °C gerührt und die Temperatur langsam auf 40 °C erhöht. Nach vier Stunden wird dann das Gemisch auf dem Rotationsverdampfer eingeengt und das erhaltene honigartige Produkt mit Butanol auf 50 % verdünnt. Die Ausbeute ist 100,5 g ≙ 97 %, der Brechungsindex $n_{20}^{D}$ = 1,520.

Beispiel 7: N-Butyl-N-methylpyrrolidinium-iodid

In einer Schliffbirne von 1000 ml werden die folgenden Substanzen vermischt und auf dem Wasserbad bei 60 °C zur Reaktion gebracht:
53,3 ml N-Methylpyrrolidin (0,5 mol)
100 ml Methylisobutylketon (MIBK)
57,2 ml Butyliodid (0,5 mol)
Nach ca. vier Stunden wird der entstandene Kristallbrei wenig verdünnt, abgenutscht, mit MIBK nachgewaschen und im Vakuum getrocknet. Ausbeute 124,9 g ≙ 93 %, Schmelzpunkt 180-182 °C.

Beispiel 8: N-Ethoxycarbonylmethyl-N-methylpyrrolidinium-bromid

In einer Schliffbirne von 1000 ml werden die ersten zwei der folgenden Substanzen vermischt und die dritte Substanz langsam in fünf Portionen mit gleichzeitigem Kühlen zugegeben:
21,3 ml N-Methylpyrrolidin (0,2 mol)
120 ml Methylisobutylketon (MIBK)
23,0 ml Ethylbromacetat (0,2 mol)
Die Reaktion wird zunächst bei ca. 30 °C geführt und die Temperatur langsam auf 50 °C erhöht. Nach vier Stunden wird der entstandene Kristallbrei abgekühlt, mit 40 ml MIBK verdünnt und abgenutscht. Nach dem Waschen mit wenig MIBK wird das Produkt im Vacuum getrocknet. Ausbeute 46,7 g ≙ 92 %, Schmelzpunkt 135-137 °C.

Beispiel 9: N-Methallyl-N-methylpyrrolidinium-chlorid

In einer 500 ml - Schliffbirne werden die folgenden Substanzen vermischt und bei 50 °C zur Reaktion gebracht:
21,3 ml N-Methylpyrrolidin (0,2 mol)
50 ml Methylisobutylketon (MIBK)
19,6 ml o-Methallylchlorid (0,2 mol)
Nach drei Stunden wird der entstandene Kristallbrei etwas verdünnt mit MIBK, abgenutscht, nachgewaschen und im Vacuum getrocknet. Ausbeute 19,7 g ≙ 56 %, Schmelzpunkt 79-80 °C.

Beispiel 10: N,N-Dibutylpyrrolidinium-iodid

In einem Sulfierkolben von 250 ml mit Rührer, Kühler und Tropftrichter werden die ersten drei der folgenden Substanzen vorgelegt und die vierte Substanz während ca. 30 Minuten zugetropft:
16,5 ml Pyrrolidin (0,2 mol)
80 ml Methylisobutylketon (MIBK)
21,2 g Natriumcarbonat sicc. (0,2 mol)
45,6 ml Butyliodid (0,4 mol)
Die Reaktion verläuft anfangs heftig und so muss der Sulfierkolben von aussen gekühlt werden durch Eintauchen in zunächst kaltes Oelbad, sodann erwärmen auf 60 °C und halten für sechs Stunden. Zur Lösung des kristallinen Produktes werden 50 ml Methanol zugegeben und bei Raumtemperatur abgenutscht. Nach dem Nachwaschen mit 30 ml Methanol wird das Filtrat auf dem Rotationsverdampfer eingeengt bis das Produkt auskristallisiert, mit MIBK aufgenommen, genutscht, gewaschen und getrocknet. Ausbeute 18,2 g ≙ 28 %, Schmelzpunkt 182-184 °C.

Beispiel 11: N-Phenylcarbonylmethyl-N-methylpyrrolidinium-bromid

In einer Schliffbirne werden die zwei ersten der folgenden Substanzen vermischt und die dritte Substanz in fünf Portionen unter gleichzeitigem Kühlen langsam zugefügt:
21,3 ml N-Methylpyrrolidin (0,2 mol)
120 ml Methylisobutylketon (MIBK)
39,8 g Phenacylbromid (0,2 mol)
Das Reaktionsgemisch wird zunächst bei Zimmertemperatur gerührt und dann die Temperatur langsam auf 40 °C angehoben. Nach einer Zeitspanne von zwei Stunden wird der entstandene Kristallbrei abgenutscht, mit MIBK gewaschen und getrocknet. Die Ausbeute beträgt 54,9 g ≙ 96 % und der Schmelzpunkt 171-173 °C.

Beispiel 12: N-2-Hydroxybutyl-N-2′-hydroxyethylpyrrolidinium-acetat

In einer Schliffbirne von 500 ml werden die folgenden Substanzen vermischt (Kühlung nötig) und bei 50 °C zur Reaktion gebracht:
23,5 ml N-2-Hydroxyethylpyrrolidin (0,2 mol)
60 ml Methylisobutylketon (MIBK)
11,4 ml Eisessig (0,2 mol)
17,4 ml Butylenoxid-1 (0,2 mol)
Nach einer Reaktionszeit von neun Stunden wird das Gemisch durch Destillation auf dem Rotationsverdampfer so lange eingeengt, bis alles Flüchtige abdestilliert ist. Die Ausbeute ergibt sich durch Rückwage des tarierten Kolbens mit 44,2 g ≙ 89 %, der Brechungsindex $n_{20}^{D}$ = 1,466. Die viskose Masse wird mit Butanol als 50%ige Lösung konfektioniert.

Beispiel 13: N-2-Hydroxybutyl-N-methylpyrrolidinium-acetat

In Analogie zu den vorhergehenden Beispielen werden die folgenden Substanzen zur Reaktion gebracht (Temperatur 50 °C):
21,3 ml N-Methylpyrrolidin (0,2 mol)
40 ml Methylethylketon (MEK)
11,4 ml Eisessig (0,2 mol)
17,4 ml Butylenoxid-1 (0,2 mol)
Nach einer Zeitspanne von zwölf Stunden wird aus dem Reaktionsgemisch alles Flüchtige wegdestilliert und der tarierte Kolben zurückgewogen. Ausbeute 38,2 g ≙ 88 %, $n_{20}^{D}$ = 1,460.

Beispiel 14: N-2-Hydroxy-2-phenylethyl-N-methylpyrrolidinium-acetat

In einer Schliffbirne, die zuvor tariert wurde, werden die folgenden Substanzen bei 60 °C reagieren lassen:
21,3 ml N-Methylpyrrolidin (0,2 mol)
30 ml Methylisobutylketon (MIBK)
11,4 ml Eisessig (0,2 mol)
23,6 ml Styroloxid (0,2 mol)
Nach der Reaktionszeit von sechs Stunden bei 60 °C wird alles Flüchtige wegdestilliert und der Kolben zurückgewogen. Das viskose Produkt hat eine Ausbeute von 47,1 g ≙ 89 % und eine Brechung von $n_{20}^{D}$ = 1,512. Davon wird eine Butanollösung von 50 % hergestellt.

Beispiel 15: N,N-Diethylpyrrolidinium-iodid

In Analogie zu Beispiel 10 wird Pyrrolidin mit der doppelten Menge Alkylierungsagens umgesetzt: in einem Sulfierkolben von 250 ml mit Rührer, Kühler und Tropftrichter werden die ersten drei der folgenden Substanzen vorgelegt und die vierte Substanz zugetropft:
16,5 ml Pyrrolidin (0,2 mol)
80 ml Methylisobutylketon (MIBK)
21,2 g Natriumcarbonat sicc. (0,2 mol)
32,4 ml Ethyliodid (0,4 mol)
Der Kolben wird wegen der anfangs heftigen Reaktion durch das noch kalte Oelbad gekühlt, es wird die

Temperatur durch zusätzliche Heizung auf 60 °C angehoben und sechs Stunden lang gehalten. Zur Lösung des kristallinen Produktes werden 50 ml Methanol zugefügt und bei Raumtemperatur abgenutscht. Nach dem Nachwaschen mit Methanol wird das Filtrat auf dem Rotationsverdampfer eingeengt, bis das Produkt auskristallisiert, dann mit MIBK aufgenommen, genutscht, gewaschen und getrocknet. Ausbeute 25,1 g ≙ 47 %, Schmelzpunkt 241-244 °C.

Beispiel 16: N-2-Hydroxy-3-butoxypropyl-N-methylpyrrolidinium-acetat

In Analogie zu Beispiel 14 werden die folgenden Substanzen in einer tarierten Schliffbirne bei 60 °C zur Reaktion gebracht:
21,3 ml N-Methylpyrrolidin (0,2 mol)
30 ml Methylisobutylketon (MIBK)
11,4 ml Eisessig (0,2 mol)
29,1 ml Butylglycid (0,2 mol)
Nach sechs Stunden wird alles Flüchtige abdestilliert und der Kolben zurückgewogen. Vom viscosen Produkt (45,7 g ≙ 83 %, $n_{20}^{D}$ = 1,464) wird eine Butanollösung von 50 % hergestellt.

Durchführung von Advancement-Reaktionen

Beispiel 17:

In einem Polymerkolben werden 845 g Bisphenol-A-diglycidylether mit einer Epoxyzahl von 5,4 eq/kg unter Rühren aufgeheizt und bei 100 °C mit einer ersten Portion Bisphenol-A (217 g) vermischt. Dann wird als Katalysator N,N-Dimethylpyrrolidinium-chlorid (Bsp. 1) in einer Butanollösung zugegeben, wobei die Konzentration, bezogen auf das Basisharz, 500 ppm (3,7 mmol/kg) beträgt. Gleichzeitig wird die Temperatur unter stetigem Rühren erhöht und bei 170 °C die zweite Portion Bisphenol A (217 g) zugegeben, wonach die Temperatur bei 180 °C gehalten wird. Nach ca. 3-4 Stunden hat die Epoxyzahl des Reaktionsgemisches den Wert von 0,60 eq/kg erreicht (durch Titration kontrolliert), wonach die Harzschmelze ausgetragen, abgekühlt und zerkleinert werden kann. Die Viskositäten dieses Harzes (40 % in Butylcarbitol, 25 °C) beträgt 2250 mPas und 3350 mPas nach einer thermischen Behandlung von 4 h/180 °C.

Beispiel 18:

Es wird analog wie im Beispiel 17 vorgegangen, wobei als Katalysator N-Ethyl-N-methylpyrrolidinium-iodid (Bsp. 2) eingesetzt wird und die Ktalysatorkonzentration, bezogen auf das Basisharz, 1000 ppm (4,1 mmol/kg) beträgt. Die Viskosität dieses Harzes beträgt 1950 mPas und 2760 mPas nach thermischer Behandlung.

Beispiel 19:

Es wird analog wie im Beispiel 17 vorgegangen, wobei als Katalysator N-Butyl-N-methyl-pyrrolidinium-bromid (Bsp. 3) eingesetzt wird, und die Katalysatorkonzentration, bezogen auf das Basisharz, 1000 ppm (4,5 mmol/kg) beträgt. Die Viskosität dieses Harzes beträgt 2070 mPas und 2830 mPas nach thermischer Behandlung.

Beispiel 20:

Es wird analog wie im Beispiel 17 vorgegangen, wobei als Katalysator N-Benzyl-N-methylpyrrolidinium-chlorid (Bsp. 4) als Katalysator eingesetzt wird und die Konzentration 2500 ppm (12,0 mmol/kg) beträgt. Die Viskosität dieses Harzes beträgt 2280 mPas und 3350 mPas nach thermischer Behandlung.

Beispiel 21:

Es wird analog zum Beispiel 17 vorgegangen, wobei als Katalysator N-Acetonyl-N-methylpyrrolidinium-chlorid (Bsp. 5) eingesetzt wird und die Konzentration, bezogen auf das Basisharz, 3000 ppm (16,9 mmol/kg) beträgt. Die Viskosität dieses Harzes ist 2000 mPas und 2800 mPas nach der thermischen Behandlung von 4 h/180 °C.

Beispiel 22:

Es wird analog zum Beispiel 17 vorgegangen, wobei als Katalysator N-Allyl-N-methylpyrrolidinium-bromid (Bsp. 6) eingesetzt wird und die Konzentration, bezogen auf das Basisharz, 2000 ppm (9,7 mmol/kg) beträgt. Die Viskosität dieses Harzes ist 1940 mPas und 2560 mPas nach der thermischen Behandlung von 4 h/180 °C.

Beispiel 23:

Es wird analog zum Beispiel 17 vorgegangen, wobei als Katalysator N-Butyl-N-methylpyrrolidinium-iodid (Bsp. 7) eingesetzt wird und die Konzentration, bezogen auf das Basisharz, 1500 ppm (5,6 mmol/kg) beträgt. Die Viskosität dieses Harzes ist 1800 mPas und 2400 mPas nach der thermischen Behandlung von 4 h/180 °C.

Beispiel 24:

Es wird analog zum Beispiel 17 vorgegangen, wobei als Katalysator N-Ethoxycarbonylmethyl-N-methylpyrrolidinium-bromid (Bsp. 8) eingesetzt wird und die Konzentration, bezogen auf das Basisharz, 3000 ppm (11,9 mmol/kg) beträgt. Die Viskosität dieses Harzes ist 1350 mPas und 1700 mPas nach der thermischen Behandlung von 4 h/180 °C.

Beispiel 25:

Es wird analog zum Beispiel 17 vorgegangen, wobei als Katalysator N-Methallyl-N-methylpyrrolidinium-chlorid (Bsp. 9) eingesetzt wird und die Konzentration, bezogen auf das Basisharz, 2000 ppm (11,4 mmol/kg) beträgt. Die Viskosität dieses Harzes ist 2240 mPas und 3520 mPas nach der thermischen Behandlung von 4 h/180 °C.

Beispiel 26:

Es wird analog zum Beispiel 17 vorgegangen, wobei als Katalysator N,N-Dibutylpyrrolidinium-iodid (Bsp. 10) eingesetzt wird und die Konzentration, bezogen auf das Basisharz, 400 ppm (1,2 mmol/kg) beträgt. Die Viskosität dieses Harzes ist 2300 mPas und 2650 mPas nach der thermischen Behandlung von 4 h/180 °C.

Beispiel 27:

Es wird analog zum Beispiel 17 vorgegangen, wobei als Katalysator N-Phenylcarbonylmethyl-N-methylpyrrolidinium-bromid (Bsp. 11) eingesetzt wird und die Konzentration, bezogen auf das Basisharz, 3000 ppm (10,6 mmol/kg) beträgt. Die Viskosität dieses Harzes ist 1200 mPas und 1600 mPas nach der thermischen Behandlung von 4 h/180 °C.

Beispiel 28:

Es wird analog zum Beispiel 17 vorgegangen, wobei als Katalysator N-2-Hydroxybutyl-N-2-hydroxyethylpyrrolidinium-acetat (Bsp. 12) eingesetzt wird und die Konzentration, bezogen auf das Basisharz, 4000 ppm (16,2 mmol/kg) beträgt. Die Viskosität dieses Harzes ist 1040 mPas und 1750 mPas nach der thermischen Behandlung von 4 h/180 °C.

Beispiel 29:

Es wird analog zum Beispiel 17 vorgegangen, wobei als Katalysator N-2-Hydroxybutyl-N-methylpyrrolidinium-acetat (Bsp. 13) eingesetzt wird und die Konzentration, bezogen auf das Basisharz, 2000 ppm (9,3 mmol/kg) beträgt. Die Viskosität dieses Harzes ist 1920 mPas und 2640 mPas nach der thermischen Behandlung von 4 h/180 °C.

Beispiel 30:

Es wird analog zum Beispiel 17 vorgegangen, wobei als Katalysator N-2-Hydroxy-2-phenylethyl-N-methylpyrrolidinium-acetat (Bsp. 14) eingesetzt wird und die Konzentration, bezogen auf das Basisharz, 4000 ppm (15,1 mmol/kg) beträgt. Die Viskosität dieses Harzes ist 1160 mPas und 1800 mPas nach der thermischen Behandlung von 4 h/180 ° C.

Beispiel 31:

Es wird analog zum Beispiel 17 vorgegangen, wobei als Katalysator N,N-Diethylpyrrolidinium-iodid (Bsp. 15) eingesetzt wird und die Konzentration, bezogen auf das Basisharz, 300 ppm (1,1 mmol/kg) beträgt. Die Viskosität dieses Harzes ist 2620 mPas und 3450 mPas nach der thermischen Behandlung von 4 h/180 ° C.

Beispiel 32:

Es wird analog zum Beispiel 17 vorgegangen, wobei als Katalysator N-2-Hydroxy-3-butoxypropyl-N-methylpyrrolidinium-acetat (Bsp. 16) eingesetzt wird und die Konzentration, bezogen auf das Basisharz, 3000 ppm (10,9 mmol/kg) beträgt. Die Viskosität dieses Harzes ist 2100 mPas und 2920 mPas nach der thermischen Behandlung von 4 h/180 ° C.

**Patentansprüche**

1. Epoxidharzzusammensetzung enthaltend ein bei Raumtemperatur flüssiges Epoxidharz mit durchschnittlich mehr als einer Epoxidgruppe pro Molekül, eine Verbindung mit 2 phenolischen Hydroxylgruppen und mindestens ein quaternäres Pyrrolidiniumsalz als Vorverlängerungskatalysator.

2. Epoxidharzzusammensetzung gemäss Anspruch 1, enthaltend Diglycidylverbindungen mit einem Molekulargewicht unter 3500.

3. Epoxidharzzusammensetzung gemäss Anspruch 1, enthaltend ein Pyrrolidiniumsalz der Formel I

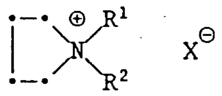 (I),

worin $R^1$ $C_1$-$C_8$-Alkyl und $R^2$ $C_1$-$C_8$-Alkyl, $C_2$-$C_8$-Hydroxyalkyl, $C_4$-$C_8$-Alkoxy-hydroxyalkyl, $C_2$-$C_8$-Alkenyl, $C_3$-$C_8$-Alkoxycarbonylalkyl, $C_3$-$C_8$-Alkylcarbonylalkyl, $C_7$-$C_9$-Phenylalkyl, $C_7$-$C_9$-Phenylhydroxyalkyl oder Phenylcarbonylmethyl bedeutet, und X Halogen oder Acetat ist.

4. Epoxidharzzusammensetzung gemäss Anspruch 1, enthaltend ein Pirrolidiniumsalz der Formel Ib

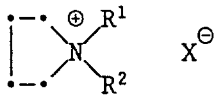 (Ib),

worin $R^1$ $C_1$-$C_8$-Alkyl und $R^2$ $C_1$-$C_8$-Alkyl, $C_1$-$C_8$-Hydroxyalkyl oder Benzyl bedeutet und X Halogen oder Acetat ist.

5. Epoxidharzzusammensetzungen gemäss Anspruch 3, enthaltend ein Pyrrolidiniumsalz der Formel I, worin $R^1$ Methyl oder Ethyl und $R^2$ Ethyl sind.

6. Epoxidharzzusammensetzungen gemäss Anspruch 3, enthaltend ein Pyrrolidiniumsalz der Formel I, worin X Iod ist.

7. Verwendung von quaternären Pyrrolidiniumsalzen als Vorverlängerungskatalysatoren für Epoxidharze.

**8.** Verwendung gemäss Anspruch 7 von Pyrrolidiniumsalzen der Formel I gemäss Anspruch 3.

## Claims

**1.** An exposy resin composition comprising an epoxy resin which is liquid at room temperature and contains on average more than one epoxy group per molecule, a compound having 2 phenolic hydroxyl groups, and at least one quaternary pyrrolidinium salt as advancement catalyst.

**2.** An epoxy resin composition according to claim 1 comprising diglycidyl compounds having a molecular weight below 3500.

**3.** An epoxy resin composition according to claim 1 comprising a pyrrolidinium salt of formula I

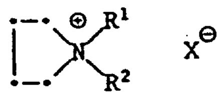

(I),

wherein $R^1$ is $C_1$-$C_8$alkyl and $R^2$ is $C_1$-$C_8$alkyl, $C_2$-$C_8$hydroxyalkyl, $C_4$-$C_8$alkoxy-hydroxyalkyl, $C_2$-$C_8$alkenyl, $C_3$-$C_8$alkoxycarbonylalkyl, $C_3$-$C_8$alkylcarbonylalkyl, $C_7$-$C_9$phenylalkyl, $C_7$-$C_9$phenylhydroxyalkyl or phenylcarbonylmethyl, and X is halogen or acetate.

**4.** An epoxy resin composition according to claim 1 comprising a pyrrolidinium salt of formula Ib

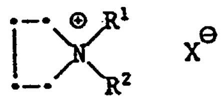

(Ib),

wherein $R^1$ is $C_1$-$C_8$alkyl and $R^2$ is $C_1$-$C_8$alkyl, $C_2$-$C_8$hydroxyalkyl or benzyl, and X is halogen or acetate.

**5.** An epoxy resin composition according to claim 3 comprising a pyrrolidinium salt of formula I, wherein $R^1$ is methyl or ethyl and $R^2$ is ethyl.

**6.** An epoxy resin composition according to claim 3 comprising a pyrrolidinium salt of formula I, wherein X is iodo.

**7.** Use of a quaternary pyrrolidinium salt as advancement catalyst for epoxy resins.

**8.** Use according to claim 7 of a pyrrolidinium salt of formula I according to claim 3.

## Revendications

**1.** Composition de résines époxydes contenant une résine époxyde liquide à la température ambiante avec en moyenne plus d'un groupe époxyde par molécule et un composé avec deux groupes hydroxyles de phénol et au moins un sel de pyrrolidinium quaternaire en tant que catalyseur de pré-allongement.

**2.** Composition de résines époxydes selon la revendication 1, contenant des composés diglycidyliques avec un poids moléculaire inférieur à 3500.

**3.** Composition de résines époxydes selon la revendication 1, contenant un sel de pyrrolidinium de formule I :

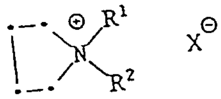

(I)

dans laquelle $R^1$ représente alkyle en $C_1$-$C_8$ et $R^2$ représente alkyle en $C_1$-$C_8$, hydroxyalkyle en $C_2$-$C_8$, alcoxyhydroxyalkyle en $C_4$-$C_8$, alcényle en $C_2$-$C_8$, alcoxycarbonylalkyle en $C_3$-$C_8$, alkylcarbonylalkyle en $C_3$-$C_8$, phénylalkyle en $C_7$-$C_9$, phénylhydroxyalkyle en $C_7$-$C_9$ ou phénylcarbonylméthyle, et X représente halogène ou acétate.

4. Composition de résines époxydes selon la revendication 1, contenant un sel de pyrrolidinium de formule (Ib) :

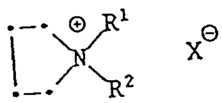

(Ib)

dans laquelle $R^1$ représente alkyle en $C_1$-$C_8$ et $R^2$ représente alkyle en $C_1$-$C_8$, hydroxyalkyle en $C_1$-$C_8$ ou benzyle, et X représente halogène ou acétate.

5. Compositions de résines époxydes selon la revendication 3, contenant un sel de pyrrolidinium de formule I où $R^1$ est méthyle ou éthyle et $R^2$ est éthyle.

6. Compositions de résines époxydes selon la revendication 3 contenant un sel de pyrrolidinium de formule I où X est l'iode.

7. Utilisation de sels de pyrrolidinium quaternaire en tant que catalyseurs de pré-allongement pour résines époxydes.

8. Utilisation selon la revendication 7 de sels de pyrrolidinium de formule I selon la revendication 3.